# EUROPÄISCHE PATENTANMELDUNG

(11) **EP 2 471 686 A1**
(43) Veröffentlichungstag der Anmeldung: **04.07.2012**
(21) Anmeldenummer: 11401671.0
(22) Anmeldetag: 20.12.2011
(51) Int. Cl.: B60P 7/08, F16G 11/12

(54) **Spannschloss eines Ratschenlastspanners zum Verzurren von Ladungen auf Fahrzeugen**

(30) Priorität: 22.12.2010 DE 1020100614
(71) Anmelder: Freigeber, Jürgen, 42799 Leichlingen (DE)
(72) Erfinder: Freigeber, Jürgen, 42799 Leichlingen (DE)
(74) Vertreter: Sroka, Peter-Christian

(57) **Zusammenfassung**

Ein Spannschloss eines Ratschenlastspanners zum Verzurren von Ladungen, insbesondere auf Fahrzeugen, bestehend aus
- einem Rohr (1) mit von beiden Rohrenden ausgehenden, gegenläufigen Innengewinden;
- zwei in die Innengewinde eingeschraubten Gewindespindeln (2), die an ihren freien Enden Befestigungselemente (2.1) für Zurrmittel aufweisen;
- einer Ratscheneinheit (4) zum Verdrehen des Rohres (1), sowie
- einem Arretierungsorgan, das zwischen einer eine Drehung der Gewindespindeln (2) zulassenden Position in eine die Gewindespindeln gegen Drehung sichernde Arretierungsstellung verstellbar ist,
ist dadurch gekennzeichnet, dass eine Gewindespindel (2) mit einer in Achsrichtung verlaufenden Nut (2.2) versehen ist, und dass das Arretierungsorgan in radialer Richtung verstellbar in die Nut (2.2) einschiebbar ist.

## Beschreibung

Die Erfindung betrifft ein Spannschloss gemäß dem Oberbegriff des Patentanspruchs 1.

Bei einem in der EP 1 435 310 B1 beschriebenen Spannschloss ist zur Sicherung der Gewindespindeln gegen unbeabsichtigtes Drehen eine entlang des Rohres verschiebbare Arretierungshülse vorgesehen, die relativ zum Rohr gegen Drehung gesichert ist und an einem Ende ein mit dem einen Befestigungselement zusammenwirkendes Arretierungsorgan aufweist.

In der DE 20 2007 016 745 U1 ist ein Spindelspanner beschrieben, der über ein äußeres Mantelrohr 4 verfügt, in dem eine Gewindespindel 5 angeordnet ist, an deren rückwärtigem Ende sich ein erstes Anschlussteil beispielsweise für eine Kette befindet. Das Mantelrohr 4 ist relativ zu einem Rohrstück 8 verschiebbar, das an dem einen Ende mit einer mit der Gewindespindel 4 kämmenden Stellmutter 9 und an dem anderen Ende mit einem Anschlussstück 10 für ein Kettenglied versehen ist. Eine dem Spindelspanner zugeordnete Verdrehsicherung 29 enthält einen verdrehgesichert entlang des Rohres 8 verschiebbaren Verriegelungsring 30 mit einem von diesem in Richtung zu dem Mantelrohr 4 abragenden Verriegelungsstift 31, der in eine von mehreren Riegelaufnahmen 32 eines verdrehgesichert an dem Mantelrohr 4 angebrachten Ringkörpers 33 einschiebbar ist. Die Sicherung des Verriegelungsringes 30 mit seinem in eine Riegelaufnahme 32 eingreifenden Verriegelungsstift 31 erfolgt durch eine am Ende des Verriegelungsstiftes 31 angeordneten Federstecker oder eine Druckfeder-Kugelanordnung. Zur Lösung der Verdrehsicherungseinrichtung kann der Verriegelungsring 30 entlang einer an der Außenseite des Rohres 8 angeordneten Nut von dem Mantelrohr 4 weg geschoben werden, wozu eine von dem Federstecker oder der Druckfeder-Kugelanordnung bereit gestellte Rastkraft überwunden werden muss. Bei dieser bekannten Anordnung befinden sich die die Verdrehsicherung bildenden Bauteile im wesentlichen an der Außenseite des Spindelspanners.

Der Erfindung liegt zur Verbesserung der Funktionstüchtigkeit eines Spannschlosses die Aufgabe zugrunde, die Arretierungseinrichtung von den außen liegenden Befestigungselementen für Zurrmittel nach innen zu verlagern.

Diese Aufgabe wird erfindungsgemäß mittels der Merkmale des Kennzeichens des Anspruchs 1 gelöst, indem die Verdrehsicherung derart gestaltet ist, dass eine unmittelbare Arretierung im Bereich des Gewindes der Gewindespindel möglich ist.

Bevorzugte Ausführungsformen der Erfindung sind in den Unteransprüchen behandelt.

Die Erfindung wird im Folgenden anhand der Zeichnung näher beschrieben.
Figur 1 zeigt eine Seitenansicht des erfindungsgemäßen Spannschlosses;
Figur 2 zeigt einen Axialschnitt des einen Endes des Spannschlosses in der Arretierungsposition der Gewindespindel;
Figur 3 zeigt entsprechend Figur 2 einen Axialschnitt in der eine Drehung der Gewindespindel ermöglichenden Position;
Figur 4 zeigt in vergrößerter Darstellung eine Einzelheit gemäß Ausschnitt I;
Figur 5 zeigt einen Axialschnitt einer abgewandelten Ausführungsform der Erfindung im nicht gegen Drehung verriegelten Zustand der Gewindespindel;
die Figuren 6 bis 8 zeigen ausschnittsweise in verschiedenen Ansichten den Bereich des Arretierungsmechanismus gemäß Figur 5 im nicht verriegelten Zustand;
Figur 7 ist eine Darstellung entsprechend der Darstellung von Figur 6 im verriegelten Zustand der Gewindespindel;
die Figuren 9 bis 11 zeigen entsprechend den Figuren 6 bis 8 den Arretierungsmechanismus im nicht verriegelten Zustand der Gewindespindel;
Figur 12 ist eine perspektivische vergrößerte Darstellung des Verriegelungsbolzen.

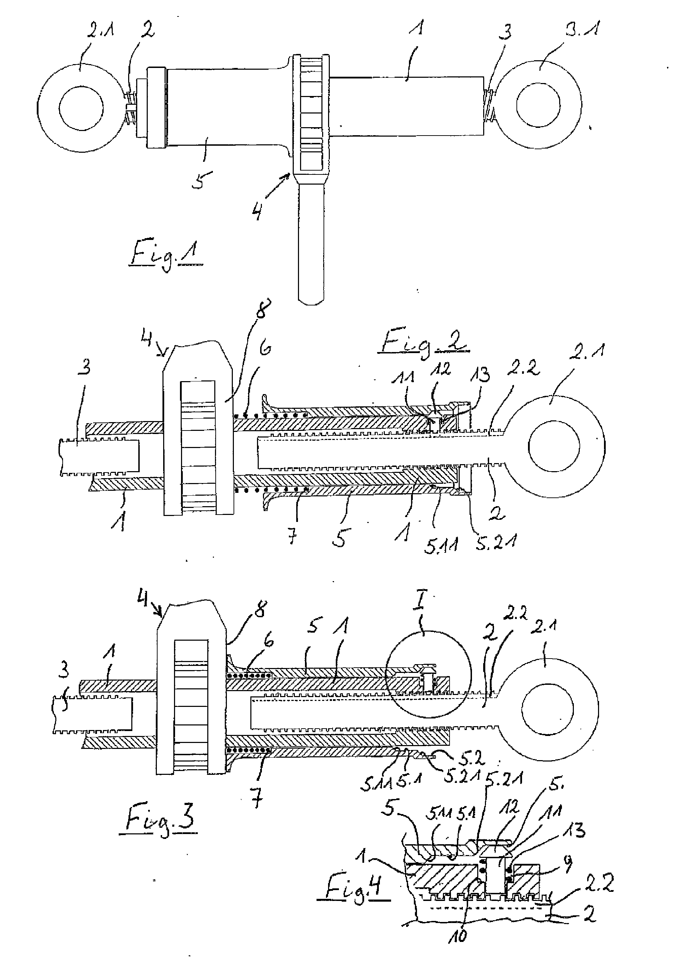

Figur 1 zeigt das erfindungsgemäße Spannschloss eines Ratschenlastspanners, bestehend aus
- einem Rohr 1, das mit von beiden Rohrenden ausgehenden gegenläufigen Innengewinden versehen ist;
- zwei in die Innengewinde eingeschraubten Gewindespindeln 2, 3, die an ihren freien Enden Befestigungselemente 2.1, 3.1 für nicht dargestellte Zurrmittel aufweisen,
- eine Ratscheneinheit 4 zum Verdrehen des Rohres 1, und
- eine auf dem Rohr 1 in Axialrichtung verschiebbare Schiebehülse 5.

Die Gewindespindel 2 ist mit einer in Axialrichtung verlaufenden Nut 2.2 versehen. Eine die Schiebehülse 5 in Richtung des Befestigungselementes 2.1 drückende Rückstellfeder 6, insbesondere Schraubendruckfeder, ist zwischen einer Ringschulter 7 der Schiebehülse 5 und einem Anschlagkörper 8 der Ratscheneinheit 4 abgestützt.

Das Rohr 1 ist mit einer radial gerichteten Stufenbohrung 9 zur Aufnahme eines in die Nut 2.2 einschiebbaren Verriegelungsbolzens 11 versehen, dessen Bolzenkopf 12 seitlich kegelstumpfförmig abgeschrägt ist.

Eine Schraubendruckfeder 13 ist zwischen der Ringschulter 10 der Stufenbohrung 9 und dem Bolzenkopf 12 abgestützt.

Die Schiebehülse 5 ist im Bereich ihres Innenumfangs mit einer ersten nach außen gerichteten Stufe 5.1 und mit einer an diese erste Stufe 5.1 anschließende zweite Stufe 5.2 versehen, die jeweils abgeschrägte Leitflächen 5.11 bzw. 5.21 entsprechend den Abschrägungen des Bolzenkopfes 12 aufweisen.

Der Verriegelungsbolzen 11 ist, wenn er sich im Bereich der ersten Stufe 5.1 befindet, gemäß Figur 2 in die Nut 2.2 der Gewindespindel 2 eingedrückt, wodurch die Gewindespindel 2 gegen Drehung gesichert ist.

Um die Gewindespindel freizugeben, wird die Schiebehülse 5 aus der in Figur 2 dargestellten Position entgegen der Kraft der Rückstellfeder 6 in Richtung des Anschlagkörpers 8 verschoben, sodass der Verriegelungsbolzen 11 bzw. der Bolzenkopf 12 gemäß Figur 3 in den Bereich der zweiten Stufe 5.2 kommt und von der Feder 13 aus der Nut 2.2 herausgedrückt wird.

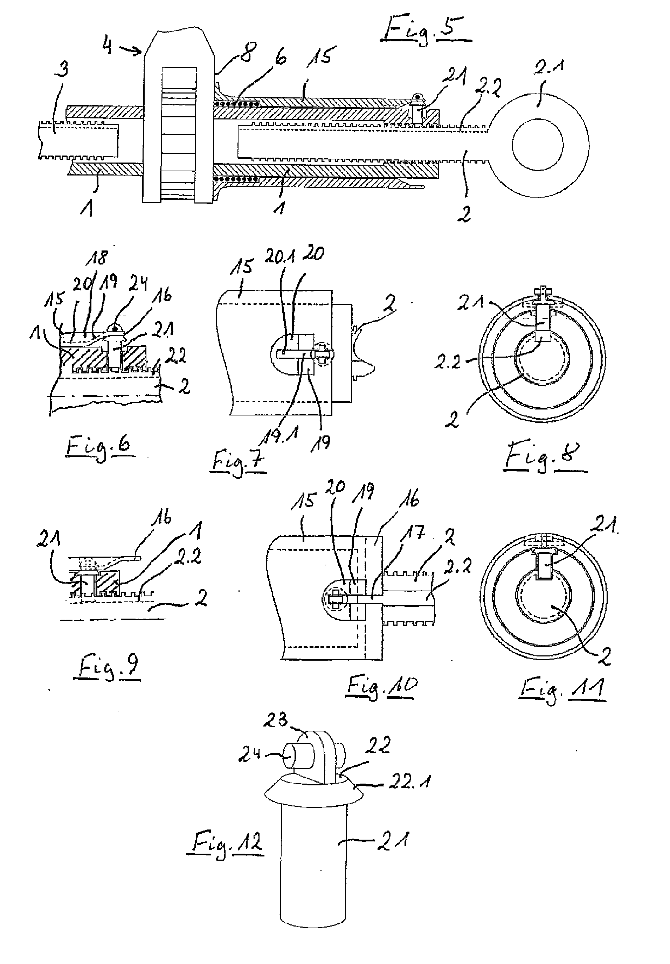

Die Schiebehülse 15 der in Figur 5 dargestellten Ausführungsform der Erfindung steht ebenso wie die Schiebehülse 5 der anhand der Figuren 2 bis 4 dargestellten Ausführungsform der Erfindung unter dem Einfluss einer Rückstellfeder 6.

Bei der Ausführungsform gemäß den Figuren 5 bis 10 sind die Schiebehülse 15 und der mittels der Schiebehülse 15 in die Nut 2.2 der Gewindespindel 2 einschiebbare Verriegelungsbolzen 21 so gestaltet und formschlüssig miteinander verbunden, dass der Verriegelungsbolzen 21 durch Verschieben der Schiebehülse 15 entweder in die Nut 2.2 geschoben oder aus dieser herausgezogen ist.

Im Bereich des Außendurchmessers der Schiebehülse 15 schließt sich an diese ein Ringkörper 16 an, dessen Innendurchmesser kleiner ist als der Innendurchmesser der Schiebehülse 15. Dieser Ringkörper 16 ist mit einem in Axialrichtung verlaufenden Schlitz 17 versehen. An den Ringkörper 16 schließt sich eine mit Abstand von der Innenwand der Schiebehülse 15 endende Einbuchtung 18 an, die breiter ist als der Schlitz 17. Diese Einbuchtung 18 hat ausgehend von dem Ringkörper 16 und anschließend an den Schlitz 17 eine schräg nach innen verlaufende Rampe 19 und einen sich an diese Rampe anschließenden, in Axialrichtung verlaufenden Boden 20. Die Rampe 19 ist anschließend an den Schlitz 17 ebenfalls mit einem Schlitz 19.1 versehen, an den sich eine durch den Boden 20 geführter Schlitz 20.1 anschließt.

An dem eine kegelstumpfartige Seitenfläche 22.1 aufweisenden Bolzenkopf 22 des Verriegelungsbolzens 21 ist ein Befestigungsorgan in Form eines bei der in Figur 6 dargestellten Position durch den Schlitz 17 geführten Bügels 23 befestigt, durch den ein auf der Außenseite des Ringkörpers 16 aufliegender Querstift 24 hindurchgesteckt ist, so dass der Verriegelungsbolzen 22 in axialer Richtung verschiebbar, jedoch in radialer Richtung formschlüssig mit der Schiebehülse 15 verbunden ist.

Wenn die Schiebehülse 15 von der Feder 6 aus der in den Figuren 5 bis 8 dargestellten Position nach außen gedrückt ist, gleitet der Verriegelungsbolzen 21 mit seinem Bolzenkopf 22 entlang der Rampe 19 in radialer Richtung nach innen und wird anschließend von dem Boden 20 der Einbuchtung 18 in die Nut 2.2 und damit in die in den Figuren 9 bis 11 dargestellte Verriegelungsposition gedrückt.

## Patentansprüche

1. Spannschloss eines Ratschenlastspanners zum Verzurren von Ladungen, insbesondere auf Fahrzeugen, bestehend aus
- einem Rohr (1) mit von beiden Rohrenden ausgehenden, gegenläufigen Innengewinden;
- zwei in die Innengewinde eingeschraubten Gewindespindeln (2; 3), die an ihren freien Enden Befestigungselemente (2.1; 3.1) für Zurrmittel aufweisen;
- einer Ratscheneinheit (4) zum Verdrehen des Rohres (1), sowie
- einem Arretierungsorgan, das zwischen einer eine Drehung der Gewindespindeln (2; 3) zulassenden Position in eine die Gewindespindeln gegen Drehung sichernde Arretierungsstellung verstellbar ist,
**dadurch gekennzeichnet, dass** eine der beiden Gewindespindeln (2) mit einer in Achsrichtung verlaufenden Nut (2.2) versehen ist, dass das Arretierungsorgan in radialer Richtung verstellbar und in die Nut (2.2) einschiebbar ist, und dass eine in axialer Richtung entlang des Rohres (1) verschiebbare Schiebehülse (5) zum Einschieben des Arretierungsorganes in die Nut (2.2) vorgesehen ist.

2. Spannschloss nach Anspruch 1, **dadurch gekennzeichnet, dass** das Arretierungsorgan ein gegen die Kraft einer Feder (13) in die Nut (2.2) einschiebbarer Arretierungsbolzen (11) ist.

3. Spannschloss nach Anspruch 2, **dadurch gekennzeichnet, dass** die Schiebehülse (5) im Bereich ihres Innenumfangs mindestens eine nach außen gerichtete Stufe (5.1 bzw. 5.2) aufweist, gegen die zwecks Freigabe der Gewindespindel (2) das äußere Ende des Arretierungsbolzens (11) unter dem Einfluss der Feder (13) zur Anlage bringbar ist.

4. Spannschloss nach Anspruch 3, **dadurch gekennzeichnet, dass** die Schiebehülse (5) an ihrem Innenumfang eine erste nach außen gerichtete Stufe (5.1), gegen die in der Arretierungsstellung der Gewindespindel (2) das äußere Ende des Arretierungsbolzens (11) gedrückt ist, und eine an die erste Stufe (5.1) anschließende zweite, nach außen gerichtete Stufe (5.2) aufweist, gegen die das äußere Ende des Arretierungsbolzens (11) in der Freigabeposition der Gewindespindel (2) anliegt.

5. Spannschloss nach Anspruch 3 oder 4, **dadurch gekennzeichnet, dass** die Schiebehülse (5) gegen die Kraft einer Rückstellfeder (6) aus der den Arretierungsbolzen (11) in die Nut (2.2) drückenden Position in die die Gewindespindel (2.2) freigebende Position verschiebbar ist.

6. Spannschloss nach einem der Ansprüche 2 bis 5, **dadurch gekennzeichnet, dass** das Rohr (1) mit einer radial gerichteten Stufenbohrung (9) zur Aufnahme des Arretierungsbolzens (11) einerseits und zur Bildung eine Stützschulter für die Feder (13) bildenden Ringschulter (10) andererseits versehen ist.

7. Spannschloss nach Anspruch 1, **gekennzeichnet durch** eine entlang des Rohres (1) gegen die Kraft einer Rückstellfeder (6) verschiebbare Schiebehülse (15), die im Bereich ihres Endes derart gestaltet ist, dass ein an der Schiebehülse (15) angebrachter, in Axialrichtung verschiebbarer Arretierungsbolzen (21) beim Verschieben der Schiebehülse (15) aus einer in die Nut (2.2) ragenden Stellung in eine die Gewindespindel freigebende Stellung außerhalb der Nut (2.2) verschiebbar ist.

8. Spannschloss nach Anspruch 7, **dadurch gekennzeichnet, dass** an den Außenumfang der Schiebehülse (15) ein Ringkörper (16) mit gegenüber dem Innendurchmesser der Schiebehülse (15) verringertem Innendurchmesser anschließt, dass der Ringkörper (16) zum Hindurchschieben eines an der Außenseite des Arretierungsbolzens (21) angebrachten Befestigungsorgans (23) mit einem in Axialrichtung verlaufenden Schlitz (17) versehen ist, an den sich eine mit Abstand von der Innenwand der Schiebehülse (15) endende Einbuchtung (18) anschließt, die breiter ist als der Schlitz (17) und die ausgehend von dem Ringkörper (16) eine schräg nach innen verlaufende Rampe (19) und einen sich an diese anschließenden Boden (20) aufweist, und dass sich an den Schlitz (17) durch die Rampe (19) und durch den Boden (20) geführte Schlitze (19.1 bzw. 20.1) anschließen.

9. Spannschloss nach Anspruch 8, **dadurch gekennzeichnet, dass** das Befestigungsorgan ein durch die Schlitze (17 bzw. 19.1 bzw. 20.1) geführter Bügel (23) ist, durch den ein ein Herausziehen des Bügels aus den Schlitzen (17 bzw. 19.1 bzw. 20.1) verhindernder Querstift (22) hindurch gesteckt ist.
